# EUROPEAN PATENT APPLICATION

(11) **EP 4 134 826 A1**
(43) Date of publication of application: **15.02.2023**
(21) Application number: 21020405.3
(22) Date of filing: 09.08.2021
(51) Int. Cl.: G06F 12/02, G06F 12/0875

(54) **MANAGEMENT OF MEMORY OF A PROCESSING DEVICE**

(71) Applicant: Giesecke+Devrient Mobile Security GmbH, 81677 München (DE)
(72) Inventor: Namjoshi, Yogendra Anant, 411021 Pune (IN)
(74) Representative: Giesecke + Devrient IP

(57) **Abstract**

A method for management of memory of a processing device, the processing device comprising: - a processor preferably with a flash memory or alike; - a heap memory structured to comprise one or several memory pages, each memory page comprising several heap memory fields, wherein the heap memory requires, for each writing of data to one or several heap memory fields of a page, an erasure of the memory page before writing to the one or several memory fields;
- a cache memory comprising several cache memory fields, wherein the cache memory allows writing of data to its cache memory fields without previous erasure of the cache memory fields; - a memory management unit constructed to manage writing and reading of data to and from the heap memory and the cache memory;
** the method comprising the steps by the memory management unit:
- writing of a first data item destined for the heap memory to a first memory area of the cache memory; - writing of at least one second data item destined for the heap memory to a second memory area of the cache memory which is, at least partially, or entirely, different from the first memory area of the cache memory; - transfer the first data item first memory area of the cache memory and the second data item, commonly named transferred data, from the second memory area of the cache memory to the heap memory in one single write operation from the cache memory to the heap memory, herein reading the transferred data from the cache memory and write the transferred data to at least one page of the heap memory.

## Description

### Field of the invention

The present invention relates to memory management in a processing device such as a smart card or smart card like device, particularly a SIM card, UICC (plug-in form factor) or eUICC (solder-in form factor) for authentication of a mobile terminal hosting the processing device or its user in a mobile network.

### Background of the invention

Typical smart cards or smart card like devices use persistent objects that require high endurance and a high number of updates over its lifetime and/or a high update frequency. Particularly in a Java Card the JC applet has a long lifetime (high endurance), and at the same time frequently updates objects. Similarly, in a processing device supporting SIM toolkit commands, the toolkit applet has a high endurance or long lifetime, and at the same time frequently updates objects. Therefore, persistent objects by applications like the JC applet or the STK applet effect a strong wearing of the memory of the processing device. In typical currently up-to-date processing devices, a heap memory based on flash memory technology is used for updates of memory objects. Flash memory requires, for every write operation to a memory cell or area, an erase operation of an entire page (or several pages) of the flash memory in which page (or multiple pages) the cell or area is included. Even if an object to be updated requires writing to a very limited number of memory cells of a flash memory page, the entire page has to be erased before writing. The operating system and/or hardware chip of a processing device is not necessarily well aligned with such long-living or high endurance applets causing high frequency memory updates. So the operating system and/or memory management and/or hardware chip keeps writing to the heap memory and may result in memory failure of the processing device.

### Objective of the invention

It is an object of the present invention to provide a memory management method for a processing device effecting reduced wearing of a heap memory of the processing device, and thus enabling an enhanced lifetime of the memory device. Another object of the present invention is to enable billing per usage method to enable an additional enhanced lifetime of the memory device over the air.

### Summary of the invention

The object of the invention is achieved by method and processing device with the following features, according to the independent claims. Embodiments of the invention are presented in dependent claims.

The method is constructed for management of memory of a processing device.

The processing device considered herein comprises:
- a processor;
- a heap memory structured to comprise one or several memory pages, each memory page comprising several heap memory fields, wherein the heap memory requires, for each writing of data to one or several heap memory fields of a page, an erasure of the memory page before writing to the one or several memory fields;
- a cache memory comprising several cache memory fields, wherein the cache memory allows writing of data to its cache memory fields without previous erasure of the cache memory fields;
- a memory management unit constructed to manage writing and reading of data to and from the heap memory and the cache memory.

The method comprises the following steps executed by the memory management unit:
- writing of a first data item destined for the heap memory to a first memory area of the cache memory;
- writing of at least one second data item destined for the heap memory to a second memory area of the cache memory which is, at least partially, or entirely, different from the first memory area of the cache memory;
- transfer the first data item first memory area of the cache memory and the second data item, commonly named transferred data, from the second memory area of the cache memory to the heap memory in one single write operation from the cache memory to the heap memory, herein reading the transferred data from the cache memory and write the transferred data to at least one page of the heap memory.

The heap memory requires, for each writing of data to one of its memory fields, and herein before the writing, an erasure of the entire memory page in which the memory field is contained. The cache memory doesn't have such a writing restriction, however allows direct writing before previous page erasure.

By first writing both the first data item and the second data item, or in general several data items, to the cache memory instead of to the heap, hereby collecting more than one data items in the cache memory, and only later commonly transferring the collected data items to the heap in a single write procedure, only one erase-write cycle in the heap for the collected data items is required, instead of one erase-write cycle per one data item. Thus, the invention helps to reduce wearing of the heap memory, and enabled increase of the lifetime of the processing device.

Preferably, the method comprises the further steps executed by the memory management unit: after the transfer from the cache memory to the heap memory, deleting the transferred data from the cache memory and complete erase of the cache memory. After the deleting or erasing, the cache memory can be used again for collecting data items, as described above.

According to some embodiments, a counter is maintained in the cache memory to count the number of flushes or erases or/and writes to the cache memory. Preferably, the counter is kept at a fixed location in the cache memory, for example at the first page or at the last page of the cache memory.

According to some embodiments, the cache memory has a predefined amount of memory space, wherein transfer of the transferred data is initiated on the occasion of writing of a target data item, which is a first or at least one second data item, to the cache memory, when it is detected that the cache memory available for writing is insufficient to store the target data item. Thus, when it is detected that the cache memory is full or almost full or is insufficient to receive the next data item, the collected date items building the cache memory content are transferred to the heap memory, and preferably in addition the cache memory is erased after the collected date items have been transferred from the cache memory to the heap memory.

According to some embodiments, data items destined for the heap memory are stored to the cache memory under one or several condition. Particularly, data items destined for the heap memory can be stored to the cache memory under the condition that at least one or both of the following condition is fulfilled:
- a memory size of the data item is lower or not higher than a predefined size limit;
- an update frequency of the data item is above or not below a predefined frequency limit.

The present invention is particularly useful for update of small data items, e.g. objects, that is of data items having a memory size of the data item which is lower or not higher than a predefined size limit. Herein, a larger number of small data items can be collected in the cache memory, before a transfer to the heap memory including a heap page erase operation is required.

Similarly, present invention is particularly useful for the data items having a high update frequency.

The present invention is particularly useful for data items that are relatively small and at the same time have a high update frequency.

According to some embodiments, data items destined for the heap memory are stored to the cache memory under the condition that the data item belongs to at least one of the following data item categories:
- static byte, byte and byte array parameter;
- static short, short and short array parameter;
- static integer, integer and integer array parameter;
- instance object parameter;
- high update array;
- a customer application persistent data object of an application implemented in the processing device.

The above listed data items have in common that they are relatively small and at the same time have a high update frequency.

Preferably, the cache memory is not erased between the writing of the first data item and the writing of the second data item, and if applicable between the writing of subsequent second data items.

Preferably, the method comprises the further steps by the memory management unit: before writing the transferred data to the at least one page of the heap memory heap memory, erase the at least one page of the heap memory to which the transferred data shall be written.

According to some embodiments, the method comprises the further steps by the memory management unit: monitoring (including counting) a number of write operations and / or erase operations and / or delete operations of the cache memory and derive and output and indicator of memory wearing based on the number of monitored write operations and / or erase operations and / or delete operations of the cache memory.

According to some embodiments, the method comprises the further steps by the memory management unit: reserving a second cache memory region to be allocated after exhausting a first cache memory region in which the first and second cache memory area are included. Preferably, the assigning of the second cache memory region is based on bill-per-usage. This means that before said allocating, the first cache memory region was accessible to writing by a user of the processing device, whereas the second cache memory region was not accessible to writing by a user of the processing device. By the allocating, the second cache memory region is made accessible to writing by a user of the processing device. In return, the user has to pay a remuneration to a manufacturer or seller or distributor of the processing device.

According to some embodiments, the method comprises the further steps by the memory management unit: using a counter to allow only a certain number of writes of a certain number of objects and/or using a counter to allow only a certain amount of total endurance or total usage after which the first cache memory region is deemed exhausted and rest updates directly go to the heap memory. The counter can be reset by bill-per-usage. This means before said reset, the user has to pay a remuneration, that is a defined or predefined amount of money, to a manufacturer or seller or distributor of the processing device, and in return the exhausted or expired counter is reset to an operational state.

A processing device according to the present invention comprises:
- a processor;
- a heap memory structured to comprise one or several memory pages, each memory page comprising several heap memory fields, wherein the heap memory requires, for each writing of data to one or several heap memory fields of a page, an erasure of the memory page before writing to the one or several memory fields;
- a cache memory comprising several cache memory fields, wherein the cache memory allows writing of data to its cache memory fields without previous erasure of the cache memory fields;
- a memory management unit constructed to manage writing and reading of data to and from the heap memory and the cache memory.
The processing device is constructed to execute a method as described above.

According to some embodiments, the processing device is an eUICC to be operated in a mobile device for authentication of the mobile device and/or the eUICC versus a mobile network. The eUICC can have any form factor, such as plug-in UICC (SIM card), embedded solder-in eUICC, or integrated iUICC integrated into a chipset of a mobile device.

### Brief description of the drawings

Embodiments of the invention will now be described with reference to the accompanying drawings, throughout which like parts are referred to by like references, and in which represents:
- Fig. 1: a schematic view on a memory of a processing device in interaction with a server, according to an embodiment of the invention;
- Fig. 2: a schematic diagram showing writing of a first data item and a second data item to a cache memory, with reading in the cache memory in between, according to an embodiment of the invention;
- Fig. 3: a schematic diagram showing transfer of transferred data from a cache memory to a heap memory, according to an embodiment of the invention;
- Fig. 4: a schematic view on a memory of a processing device with utilized and reserved bank of memory, according to an embodiment of the invention;
- Fig. 5: a schematic view on a memory of a processing device with post-utilization and newly allocated bank of memory from the reserved bank of memory, according to an embodiment of the invention.

### Detailed description of the invention

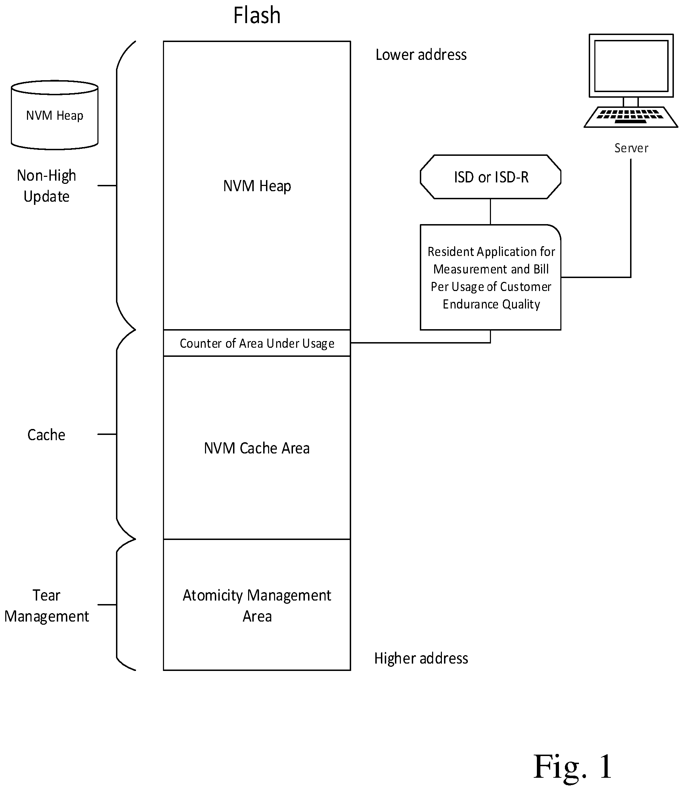

Fig. 1 shows a schematic view on a memory of a processing device in interaction with a server, according to an embodiment of the invention. The memory of the processing device comprises a non-volatile memory NVM, for example a flash memory or other NVM memory. The NVM comprises a cache memory - NVM Cache Area, a heap memory - NVM heap, and an Atomicity Management Area. Further, a counter is allocated to the NVM Cache Area. Data items destined for the NVM heap and fulfilling the conditions that they are sufficiently small and/or sufficiently frequently . updated are stored in the NVM Cache Area, instead of in the NMV Heap.. The NVM Cache Area is assigned to collecting and storing data items destined for the NVM Heap which fulfil the conditions that they are sufficiently small and/or sufficiently frequently updated. The NVM Cache Area also contains regions not yet used for receiving and collecting small / frequently updated data items destined for the NVM Heap and remaining reserved areas of the NVM Cache Area that are not allocated assigned as High Udpate Area (yet).. Only when the NVM Cache Area is too full to accept a next data item that should be stored to the NVM Cache Area, the data items collected in the NVM Cache Area so far are transferred to the NVM heap, and afterwards the NVM Cache Area is erased. Afterwards, new data items can be written to the NVM Cache Area until the NVM Cache Area gets full again. The counter of the allocated NVM Cache Area counts and monitors the number of write and/or erase operations of the NVM Cache Area. In case the NVM Cache Area is, according to the counting and monitoring over-worn, a different region of the NVM Cache Area, or a currently blocked or reserved memory region is assigned as new NVM Cache Area for receiving and collecting small / frequently updated data items destined for the NVM Heap. For assigning of a new new NVM Cache Area for receiving and collecting small / frequently updated data items destined for the NVM Heap, additional costs can arise for the user of the memory, depending on size of the NVM Cache Area. Such a cost principle is sometimes referred to as bill-per-use.

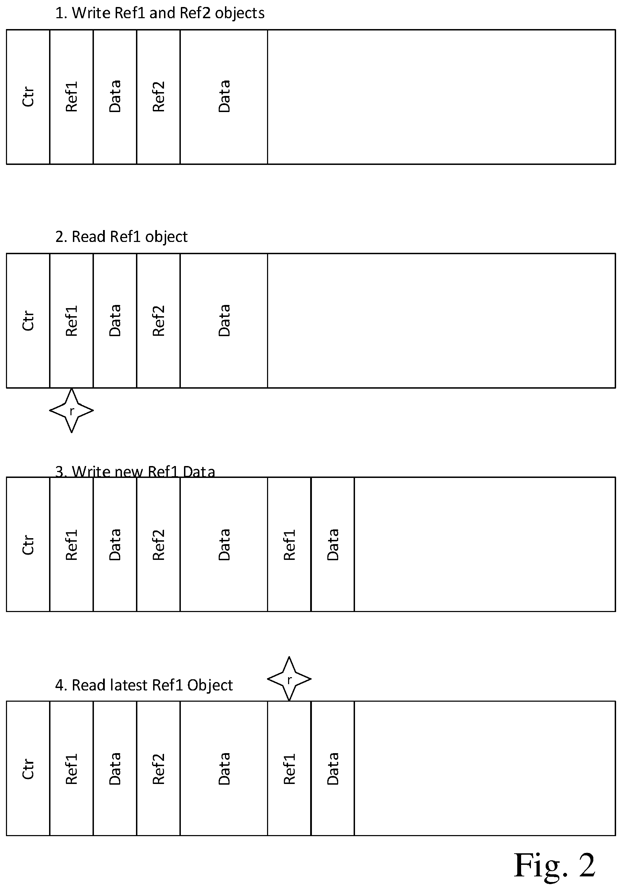

Fig. 2 shows a schematic diagram showing writing of a first data item and a second data item to a cache memory, with reading in the cache memory in between, according to an embodiment of the invention.

Fig. 2, view 1, shows a portion of a NVM Cache memory as in Fig. 1, and including written therein a Counter Ctr, a first data item, Ref1/Data, and a second data item Ref2/Data. The counter has a certain count Ctr. Fig. 2, view 2 shows reading of the first data item, Ref1/Data from the NVM Cache Memory, for updating it, and writing it back to the NVM Cache Memory in amended form as another data item, Ref1/Data. Fig. 2, view 3 shows the NVM Cache memory including written therein the first data item, Ref1/Data, and the second data item Ref2/Data, as in view 1, and in addition the amended first data item, Ref1/Data (at the place where in view 1 and 2 no data item was contained). Fig. 2, view 4, shows reading of the updated first data item, Ref1/Data, for another update.

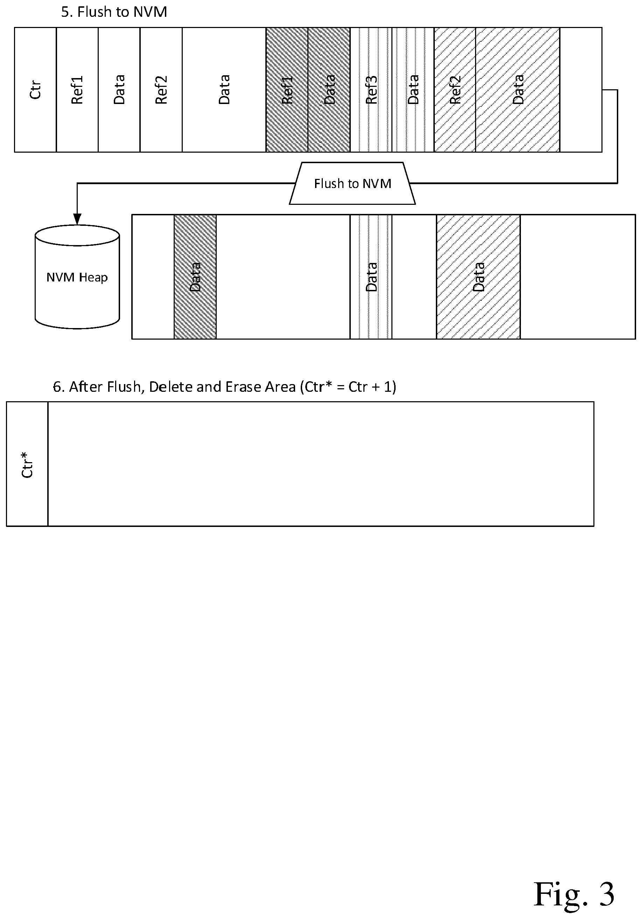

Fig. 3 shows a schematic diagram showing transfer of transferred data from a NVM Cache memory area to a heap memory, according to an embodiment of the invention. The NVM Cache memory, view 5, is filled with several data items, namely from left to right, a first data item Ref1/Data, a second data item Ref2/Data, an updated version of the first data item, Ref1/Data with hashed background, a third data item (which is another data item like the second data item), Ref3/Data, an updated version of the second data item, Ref2/Data with hashed background. The NVM Cache memory area is almost full. A next data item could not be written to the NVM Cache memory any more. Therefore, all the listed data items of view 5 are flushed to the NVM heap in one single write operation. Hereby, either all or only the most current versions of the data items can be transferred to the NVM heap. According to Fig. 3, only the most current versions of the data items are transferred to the NVM heap, namely updated Data from Ref1, original Data from Ref3, and updated Data from Ref2. After flushing, the NVM Cache Area / High Update Area is erased. A counter (or several counters) is assigned to the NVM Cache memory, in Fig. 3 shown in its fixed location. The counter counts five write operations and/or erase operation or flush operation of the NVM Cache Area. View 6 shows a flushed NVM Cache Memory Area whose counter is incremented. This means, that the counter of the embodiment of Fig. 2 and 3 increased the count of the counter by one unit, for example for the one erase operation. A counter implemented differently could, in the embodiment of Fig. 2 and 3, increase its count by five units.

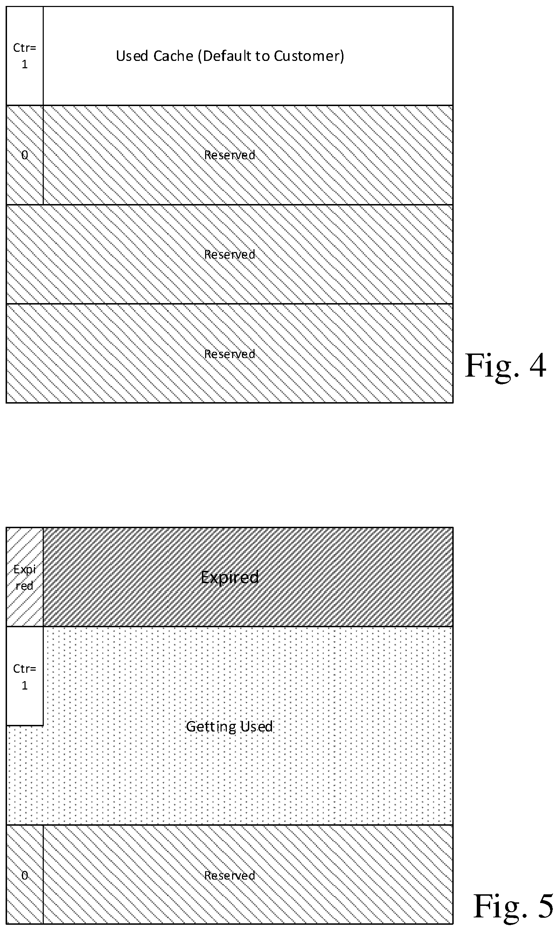

Fig. 4 shows a schematic view on a Cache memory Area of a processing device with utilized and reserved banks of memory, according to an embodiment of the invention. From top to bottom, the top area (white background) of the NVM Cache Area is currently in use, with one write or erase having occurred yet (counter count CTR One = 1). The three NVM Cache Areas below (hashed) are not accessible to the user yet, and reserved for later use, their counters being set to a count CTR Zero = 0.

Fig. 5 shows a schematic view on a Cache memory Area of a processing device with post-utilization and newly allocated bank of memory from the reserved bank of memory, according to an embodiment of the invention. From top to bottom, the top area (dark hashed background) of the NVM Cache Area has been used until the counter indicated over-wearing and set a status of the NVM Cache Area to expired. The top area (dark hashed background) of the NVM Cache Area is expired and no longer accessible to the user, its counter being set to a status expired. The next (dotted) area of the NVM Cache Area is currently in use, similar to the top region of Fig. 4, however with one write operation having occurred already (counter count CTR One = 1). The bottom NVM Cache Area (hashed) are not accessible to the user yet, and reserved for later use, similar as the three bottom areas in Fig. 4, its counter being set to a count CTR Zero = 0.

## Claims

1. A method for management of memory of a processing device, the processing device comprising:
- a processor;
- a heap memory structured to comprise one or several memory pages, each memory page comprising several heap memory fields, wherein the heap memory requires, for each writing of data to one or several heap memory fields of a page, an erasure of the memory page before writing to the one or several memory fields;
- a cache memory comprising several cache memory fields, wherein the cache memory allows writing of data to its cache memory fields without previous erasure of the cache memory fields;
- a memory management unit constructed to manage writing and reading of data to and from the heap memory and the cache memory;
** the method comprising the steps by the memory management unit:
- writing of a first data item destined for the heap memory to a first memory area of the cache memory;
- writing of at least one second data item destined for the heap memory to a second memory area of the cache memory which is, at least partially, or entirely, different from the first memory area of the cache memory;
- transfer the first data item first memory area of the cache memory and the second data item, commonly named transferred data, from the second memory area of the cache memory to the heap memory in one single write operation from the cache memory to the heap memory, herein reading the transferred data from the cache memory and write the transferred data to at least one page of the heap memory.

2. The method according to claim 1, comprising the further steps by the memory management unit:
- after the transfer from the cache memory to the heap memory, deleting the transferred data from the cache memory and/or complete erase of the cache memory.

3. The method according to claim 1 or 2, wherein the cache memory has a predefined amount of memory space, and wherein transfer of the transferred data is initiated on the occasion of writing of a target data item, which is a first or at least one second data item, to the cache memory, when it is detected that the cache memory available for writing is insufficient to store the target data item.

4. The method according to any of claims 1 to 3, wherein data items destined for the heap memory are stored to the cache memory under the condition that at least one or both of the following condition is fulfilled:
- a memory size of the data item is lower or not higher than a predefined size limit;
- an update frequency of the data item is above or not below a predefined frequency limit.

5. The method according to any of claims 1 to 4, wherein data items destined for the heap memory are stored to the cache memory under the condition that the data item belongs to at least one of the following data item categories:
- static byte, byte and byte array parameter;
- static short, short and short array parameter;
- static integer, integer and integer array parameter;
- instance object parameter;
- high update array;
- a customer application persistent data object of an application implemented in the processing device.

6. The method according to any of claims 1 to 5, wherein the cache memory is not erased between the writing of the first data item and the writing of the second data item, and if applicable between the writing of subsequent second data items.

7. The method according to any of claims 1 to 6, comprising the further steps by the memory management unit: before writing the transferred data to the at least one page of the heap memory heap memory, erase the at least one page of the heap memory to which the transferred data shall be written.

8. The method according to any of claims 1 to 7, comprising the further steps by the memory management unit: monitoring a number of write operations and / or erase operations and / or delete operations of the cache memory and derive and output and indicator of memory wearing based on the number of monitored write operations and / or erase operations and / or delete operations of the cache memory.

9. The method according to any of claims 1 to 8, comprising the further steps by the memory management unit: reserving a second cache memory region to be allocated, preferably based on bill-per-usage, after exhausting a first cache memory region in which the first and second cache memory area are included.

10. The method according to any of claims 1 to 8, comprising the further steps by the memory management unit: counting the number of erase or number of updates of a predefined number of objects and, the counter being set to an exhausted or expired state based on a committed endurance or upon reaching a predefined count limit.

11. The method according to claim 10, counter further being reset from exhausted or expired state to operational state against payment of a usage-dependent defined remuneration.

12. A processing device comprising:
- a processor;
- a heap memory structured to comprise one or several memory pages, each memory page comprising several heap memory fields, wherein the heap memory requires, for each writing of data to one or several heap memory fields of a page, an erasure of the memory page before writing to the one or several memory fields;
- a cache memory comprising several cache memory fields, wherein the cache memory allows writing of data to its cache memory fields without previous erasure of the cache memory fields;
- a memory management unit constructed to manage writing and reading of data to and from the heap memory and the cache memory;
** the processing device constructed to execute a method according to any of claims 1 to 11, comprising particularly the steps by the memory management unit:
- writing of a first data item destined for the heap memory to a first memory area of the cache memory;
- writing of at least one second data item destined for the heap memory to a second memory area of the cache memory which is, at least partially, or entirely, different from the first memory area of the cache memory;
- transfer the first data item first memory area of the cache memory and the second data item, commonly named transferred data, from the second memory area of the cache memory to the heap memory in one single write operation from the cache memory to the heap memory, herein reading the transferred data from the cache memory and write the transferred data to at least one page of the heap memory.

13. A processing device according to claim 12, which is an eUICC to be operated in a mobile device for authentication of the mobile device and/or the eUICC versus a mobile network.
